# DEMANDE DE BREVET EUROPEEN

(11) **EP 3 747 573 A1**
(43) Date de publication de la demande: **09.12.2020**
(21) Numéro de dépôt: 20178427.9
(22) Date de dépôt: 05.06.2020
(51) Int. Cl.: B22F 3/105, B33Y 10/00, B33Y 70/00, B33Y 80/00, C22C 32/00, C22C 30/00, C22C 1/04, C22C 33/02

(54) **PROCEDE DE FABRICATION ADDITIVE D'UNE PIECE EN UN ALLIAGE CCA NITRURE**

(30) Priorité: 07.06.2019 FR 1906124
(71) Demandeur: Commissariat à l'Energie Atomique et aux Energies Alternatives, 75015 Paris (FR); Centre National de la Recherche Scientifique, 75016 Paris (FR); UNIVERSITE DE BORDEAUX, 33000 Bordeaux (FR); Institut Polytechnique de Bordeaux, 33402 Talence Cedex (FR)
(72) Inventeur: PEYROUZET, Florian, 38054 GRENOBLE CEDEX 09 (FR); NAVONE, Christelle, 38054 GRENOBLE CEDEX 09 (FR); GORSSE, Stéphane Bernard, 33800 BORDEAUX (FR)
(74) Mandataire: Nony

(57) **Abrégé**

Procédé de fabrication d'un produit métallurgique comportant, pour plus de 90,0 % de sa masse, un alliage nitruré à durcissement structural comportant :
- une matrice cristalline en un alliage concentré complexe comportant au moins un métal de base nitrurigène, et
- des précipités nitrurés, dispersés dans la matrice, en un nitrure métallique,
le procédé comportant :
i') la fourniture d'une poudre de départ comportant, voire étant constituée par, des particules contenant l'alliage concentré complexe, et
ii') la mise en forme du produit métallurgique par une technique de fabrication additive, à partir de la poudre de départ,
la poudre de départ comportant, voire étant constituée par, des particules formées de l'alliage nitruré et/ou la mise en forme à l'étape ii') étant opérée au sein d'une atmosphère non-oxydante formée d'un gaz réactif contenant de l'azote.

## Description

L'invention concerne le domaine de la métallurgie et de la mise en forme des alliages concentrés complexes.

Jusqu'à 2004, la mise au point d'un alliage consistait classiquement à ajouter des éléments d'alliage minoritaires à un ou, au plus, deux métaux de base majoritaires, jusqu'à obtention des propriétés magnétiques, mécaniques ou thermiques souhaitées. Les aciers et fontes, dont le métal de base est le fer, allié avec du carbone et d'autres éléments d'alliage, les alliages d'aluminium, le laiton, le bronze et les super-alliages à base de nickel sont fabriqués selon de cette façon.

Les alliages concentrés complexes, aussi dénommés alliages CCA, définissent une nouvelle classe d'alliages. Ils sont définis comme étant formés d'au moins trois métaux de base auxquels sont ajoutés des éléments d'alliage. Chaque métal de base est présent au sein de l'alliage concentré complexe en une proportion telle que son pourcentage atomique est compris entre 10 % et 50 %. Le pourcentage atomique d'un élément chimique au sein d'un alliage est le rapport, exprimé en pourcents, du nombre de moles de cet élément sur le nombre total de moles constituant l'alliage.

On connaît parmi les alliages concentrés complexes, les alliages à haute entropie (« high entropy alloys », ou HEAs en terminologie anglo-saxonne), les alliages à éléments principaux multiples (« multi-principal element alloys » ou MPEAs en terminologie anglo-saxonne), et les alliages sans base (« baseless alloys » en terminologie anglo-saxonne). Notamment, les HEAs ont été présentés pour la première fois dans les publications «Microstructural development in equiatomic multicomponent alloys», B. Cantor et al., Mater. Sci. Eng. A, vol. 375-377, pages 213-218, 2004 et «Nanostructured High-Entropy Alloys with Multiple Principal Elements: Novel Alloy Design Concepts and Outcomes», Yeh et al., Adv. Eng. Mater., vol. 6, no. 5, pages 299-303, 2004.

Les alliages à haute entropie sont composés d'au moins cinq éléments principaux en proportion équiatomique ou équivalente. L'entropie configurationnelle de ces alliages est maximisée et stabilise ainsi une unique solution solide concentrée, de structure cristallographique cubique à face centrée (CFC), cubique centrée (CC) ou hexagonale compact (HCP). La microstructure des alliages CCA peut être monophasée ou polyphasée. La microstructure des alliages HEA est monophasée.

A titre illustratif, il est connu de US 2017/0209954 une structure en alliage contenant du fer et au moins quatre éléments, choisis parmi les éléments de numéro atomique allant de 13 à 79 inclus dans le groupe 3 à 16 du tableau périodique des éléments, et dont le rapport du rayon atomique par rapport à celui d'un atome de fer varie de 0,83 à 1,17.

Il est par exemple connu de «Microstructures and mechanical properties of C-containing FeCoCrNi high-entropy alloy fabricated by selective laser melting», R. Zhou et al., Intermetallics, vol. 94, pages 165-171, 2018, un HEA FeCoCrNi contenant du carbone et fabriqué par fusion sélective par laser.

Afin d'améliorer les propriétés d'un alliage concentré complexe, et notamment augmenter sa contrainte à la rupture, il est connu de procéder à un durcissement structural de l'alliage. Pour cela, la composition de l'alliage est adaptée et/ou son procédé comporte une ou plusieurs étapes spécifiques.

Il est par exemple connu de conduire un procédé comportant la germination par précipitation d'une ou plusieurs phases nanométriques. Cette méthode de durcissement nécessite un contrôle des phénomènes de germination/croissance parfaitement maîtrisé.

Il est aussi connu de l'article «High-entropy alloy strengthened by in situ formation of entropy-stabilized nano-dispersoids», B. Gwalani et al., Scientific Reports, vol. 8, Article number: 14085, 2018, d'introduire dans la matrice de l'alliage, des nanoparticules plus dures que la matrice, par exemple formées d'oxyde d'yttrium ou d'un carbure. Les nanoparticules piègent les dislocations par mécanisme d'Orowan, limitant leur mouvement et augmentant ainsi la contrainte à la rupture du matériau. Le procédé de fabrication d'un tel alliage à durcissement structural requiert la préparation d'une charge de départ par mélange au moyen d'un broyeur à billes d'une poudre comportant des particules de l'alliage et d'une poudre formée des particules dures, suivie d'une étape de frittage SPS. Cette méthode présente l'inconvénient que les particules dures sont difficiles à mettre en œuvre et difficilement industrialisable du fait de problèmes de sécurité pour la santé humaine (risque nanométrique).

Il est encore connu des articles «A precipitation-hardened high-entropy alloy with outstanding tensile properties», J.Y. He et al., Acta Materialia, Vol. 102, pages 187-196, 2016 et de «Metastable high-entropy dual-phase alloys overcome the strength-ductility trade-off», Z. Li et al., Nature, Vol. 534, pages 227-230, 2016, de formuler la composition de l'alliage concentré complexe de telle sorte qu'au cours de la déformation de l'alliage, une transformation de phase s'opère. L'alliage passe par exemple d'une structure cubique à faces centrées vers une structure hexagonale compact. Le changement de phase s'accompagne d'une variation d'énergie interne qui résulte en un durcissement structural du matériau. Cependant, un tel mécanisme de durcissement structural, de type « Dual Phase » ou « TRIP » pour « TRansformation Induced Plasticity » selon les terminologies en langue anglaise, est limité à un nombre restreint de compositions d'alliages.

Une autre méthode de durcissement structural consiste à insérer un élément parmi l'hydrogène, le bore, le carbone, l'azote et l'oxygène, en positon interstitielle entre les métaux constituant la maille élémentaire du réseau cristallin, généralement de type ferritique (cubique centré) ou austénitique (cubique à faces centrées), de l'alliage concentré complexe. Par exemple, l'article «Interstitial atoms enable joint twinning and transformation induced plasticity in strong and ductile high-entropy alloys», Z. Li et al., Scientific Reports, 7:40704, DOI:10.1038/srep40704, décrit le durcissement structural par insertion de carbone dans l'alliage Fe_{49.63}Mn_{27.27}Co_{11.65}Cr_{10.86}C_{0.59}.

Il existe donc un besoin pour une nouvelle approche pour proposer un matériau à base d'un alliage concentré complexe, présentant une ou plusieurs microstructures spécifiques et dont la fabrication s'avère significativement moins contraignante que dans l'art antérieur.

L'invention vise à répondre à ce besoin.

### ALLIAGE NITRURE

Plus particulièrement, l'invention concerne un alliage nitruré à durcissement structural comportant :
- une matrice cristalline en un alliage concentré complexe comportant au moins un métal de base nitrurigène, et
- des précipités nitrurés, dispersés dans la matrice, en un nitrure métallique.

Un métal nitrurigène est apte à réagir avec l'azote pour former un nitrure dudit métal. Les conditions de formation d'un nitrure d'un métal nitrurigène sont bien connues de l'homme du métier. Elles sont par exemple classiquement déterminables au moyen d'un diagramme d'Ellingham.

La dispersion dans la matrice des précipités nitrurés confère à l'alliage nitruré une limite d'élasticité et une contrainte à rupture plus élevés que la limite d'élasticité et la contrainte à rupture de l'alliage concentré complexe. Elle peut en outre conférer, suivant le procédé de fabrication de l'alliage nitruré, une élongation à rupture plus élevée.

Comme indiqué précédemment, chacun des au moins trois métaux de base de l'alliage concentré complexe est présent en une proportion telle que son pourcentage atomique est compris entre 10 % et 50 %. En particulier, chacun des au moins trois métaux de base peut être présent en une proportion telle que son pourcentage atomique est d'au moins 20 %.

De préférence, les précipités nitrurés sont cristallins. De préférence, ils sont cohérents ou semi-cohérents avec la matrice. De cette façon, la cohésion entre la matrice et les précipités nitrurés est maintenue, notamment lors de phases de chauffage et de refroidissement de l'alliage nitruré. L'alliage nitruré présente ainsi une bonne résistance à la fissuration.

Un précipité « cohérent » présente une continuité cristallographique avec la matrice. Un précipité « semi-cohérent » présente une continuité cristallographique avec la matrice seulement selon certains plans cristallins et une continuité cristallographique selon au moins un autre plan.

De préférence, le nitrure métallique présente une dureté, par exemple une dureté Vickers, plus élevée que l'alliage concentré complexe.

Les précipités nitrurés peuvent représenter moins de 10 %, voire de préférence moins de 5 % de la masse de l'alliage nitruré. Ils peuvent représenter entre 0,005 % et 2,000 % de la masse de l'alliage nitruré.

Plus de 50 %, voire, de préférence plus de 80%, voire plus de 90 % en nombre des précipités nitrurés peuvent présenter une taille comprise entre 1 nm et 500 nm. La taille d'un précipité est mesurée sur une image acquise en microscopie atomique à transmission pour les précipités les plus fins et/ou à l'aide d'un microscope électronique à balayage pour les précipités les plus gros. Elle correspond au diamètre du plus petit cercle circonscrit au précipité sur l'image. De préférence, la mesure de la taille des précipités est mise en œuvre sur au moins une image, de telle sorte que plus de la taille de plus de 100 précipités soit mesurée.

De préférence, les précipités nitrurés sont en un nitrure dudit métal de base.

De préférence les précipités nitrurés sont en un nitrure d'au moins un métal choisi parmi le titane, l'aluminium, le cobalt, le silicium, le nickel, le vanadium, le chrome, le molybdène, le fer et le zirconium.

Des précipités co-nitrurés et/ou des précipités chacun formés d'un nitrure différent peuvent être formés, dans une variante où l'alliage concentré complexe comporte plusieurs métaux de base nitrurigènes.

Le métal de base est de préférence choisi parmi le scandium, le titane, le vanadium, le chrome, le manganèse, le fer, le cobalt, le nickel, le cuivre, le zinc, le zirconium, le niobium, le molybdène, l'hafnium, le tantale, le tungstène, le rhénium, l'aluminium et le silicium.

Le métal de base est de préférence choisi parmi le titane, l'aluminium, le cobalt, le silicium, le nickel, le vanadium, le chrome, le molybdène, le fer et le zirconium, et les précipités nitrurés sont en un nitrure d'au moins un métal choisi parmi le titane, l'aluminium, le cobalt, le silicium, le nickel, le vanadium, le chrome, le molybdène, le fer et le zirconium.

L'alliage concentré complexe peut comporter au moins deux, voire au moins trois métaux de base choisis parmi le titane, l'aluminium, le zirconium, le silicium, le vanadium, le chrome, le molybdène, le cobalt, le nickel et le fer.

L'alliage concentré complexe peut être choisi parmi AlₓCoCrFeNi, avec x compris entre 0,02 et 1, x étant notamment supérieur à 0,05, et FeCoNiCrTiAl.

De préférence, l'alliage concentré complexe comporte de l'aluminium.

De préférence, l'alliage concentré complexe est de formule Al_{0,3}CoCrFeNi.

De préférence, les précipités nitrurés sont dispersés dans la matrice de manière homogène.

De préférence, la matrice est polycristalline. Une matrice polycristalline est composée de grains monocristallins liés les uns aux autres et séparés par des joints de grains.

De préférence, les précipités nitrurés sont dispersés en partie dans les grains et en partie aux joints de grains de la matrice.

La matrice et les précipités nitrurés représentent de préférence plus de 90,0 %, de préférence plus de 99,0 %, de préférence plus de 99,9 % de la masse de l'alliage nitruré. Le complément est par exemple formé d'impuretés. Par « impuretés », on entend les constituants inévitables, introduits involontairement et nécessairement avec les matières premières ou résultant de réactions avec ces constituants. Les impuretés ne sont pas des constituants nécessaires, mais seulement tolérés.

L'alliage nitruré peut comporter de l'azote en solution solide au sein de la matrice, la teneur molaire en azote en solution solide étant notamment comprise entre 0,02 % et 2,00%, en pourcentages sur la base sur du nombre total de moles de la matrice. L'azote en solution solide présente un effet durcissant notamment dans l'austénite, plus élevé par exemple que celui induit par le carbone en position substitutionnelle dans le réseau cristallin. En outre, l'azote peut procurer un effet gammagène et modifier la stabilité de la structure cristalline de l'austénite.

L'alliage nitruré peut comporter d'autres précipités formés d'au moins un, voire de plusieurs éléments chimiques constitutifs de l'alliage concentré complexe, les autres précipités étant de préférence cohérents ou semi-cohérents avec la matrice. Plus de 80 %, voire plus de 90 % en nombre des autres précipités peuvent présenter une taille comprise entre 1 nm et 200 nm.

Par ailleurs, l'alliage nitruré peut présenter une limite d'élasticité plus de deux fois, voire plus de trois fois supérieure à la limite d'élasticité de l'alliage concentré complexe présentant une même taille de grains. La limite d'élasticité Re_{0,2} est mesurée conventionnellement pour une déformation plastique égale à 0,2 %.

Sauf mention contraire, les caractéristiques de l'alliage nitruré sont exprimées à pression atmosphérique et à température ambiante.

Sauf mention contraire, les pourcentages sont exprimés en nombre.

Comme cela apparaîtra clairement dans la suite de la description, l'alliage nitruré peut se présenter en vrac sous la forme d'une poudre, sous la forme d'un revêtement ou sous la forme d'une pièce.

L'invention concerne donc aussi un procédé de fabrication de l'alliage nitruré selon l'invention.

### PROCEDE DE FABRICATION DE L'ALLIAGE NITRURE PAR FUSION

L'invention concerne encore un procédé de fabrication de l'alliage nitruré selon l'invention, dénommé par la suite « procédé de fabrication par fusion », le procédé comportant
a) la fusion d'une matière première jusqu'à obtention d'une matière liquide, et
b) la solidification par trempe thermique de la matière liquide jusqu'à obtention de l'alliage nitruré,
l'étape a) et/ou l'étape b) étant opérées au sein d'une atmosphère non-oxydante formée d'un gaz réactif contenant de l'azote.

Par atmosphère « non-oxydante », on considère une atmosphère sensiblement, voire totalement dépourvue d'oxygène gazeux. L'air ne constitue pas une atmosphère non-oxydante. L'atmosphère non-oxydante est réactive, et donc pas neutre, car le gaz réactif qui la forme réagit avec des éléments de l'alliage complexe concentré pour former les précipités nitrurés.

De préférence le gaz réactif comporte, pour plus de 80 % de sa masse, de l'azote ou un mélange d'azote et d'au moins un gaz neutre. Le gaz neutre est par exemple de l'argon.

De préférence, les étapes a) et b) sont effectuées au sein de l'atmosphère non-oxydante.

A l'étape a), le gaz réactif peut être soufflé sur la matière liquide.

A l'étape a), la matière première peut comprendre, voire consister en l'alliage concentré complexe à l'état solide. En variante, une charge de départ peut être préparée, comportant un mélange de matières premières, par exemple sous forme de poudres, déterminées de manière à obtenir la composition de l'alliage concentrée complexe.

De préférence, la vitesse de refroidissement à l'étape b) est supérieure à 100 K.s⁻¹.

Dans un premier mode de mise en œuvre, la fusion est opérée de sorte à former une goutte faite de la matière liquide. Ainsi, en fin d'étape b) l'alliage nitruré se présente sous la forme d'une poudre de particules.

La formation des gouttes de matière liquide peut être mise en œuvre par une technique d'atomisation.

La technique d'atomisation peut comprendre :
- la mise en rotation d'une électrode formée de l'alliage concentré complexe à l'état solide, l'électrode étant introduite dans l'espace intérieur d'une bobine à induction,
- la fusion de l'électrode par transport d'un courant électrique dans la bobine à induction, de manière à former une couche d'alliage concentré complexe en fusion, et
- le soufflage du gaz réactif pour atomiser la couche d'alliage concentré complexe en fusion sous la forme de gouttes de matière liquide.

En variante, la technique d'atomisation peut comprendre la fusion d'un fil formé de l'alliage concentré complexe à l'état solide et l'atomisation du fil ainsi fondu sous forme de gouttes de matière liquide au moyen d'au moins une torche plasma.

Selon encore une autre variante, la technique d'atomisation peut comporter :
- la fusion d'une charge de départ formée de l'alliage concentré complexe jusqu'à obtention d'un bain de matière en fusion et le coulage du bain de matière en fusion, et
- l'atomisation du bain de matière en fusion au moyen d'un jet du gaz réactif sous pression pour former les gouttes de matière liquide.

Un bain de matière en fusion est sous une forme liquide pour plus de 95,0 %, de préférence plus de 99,0 %, de préférence plus de 99,9 %, de préférence sensiblement 100 % de sa masse.

A l'étape a), en variante, la formation de gouttes peut être mise en œuvre par une technique de sphéroïdisation. La technique de sphéroïdisation peut comporter le transport d'une charge de départ formée de l'alliage concentré complexe sous forme broyée au sein d'un plasma inductif.

A l'étape b), les gouttes sont refroidies par trempe thermique. L'homme du métier sait déterminer les conditions pour opérer une trempe thermique. La trempe thermique permet la précipitation d'une phase nitrurée au sein de chaque goutte.

De préférence, la vitesse de refroidissement des gouttes à l'étape b) est supérieure à 10⁴ K.s⁻¹, voire supérieure à 10⁶ K.s⁻¹.

Selon un deuxième mode de mise en œuvre, la fusion est opérée jusqu'à formation d'un bain contentant, voire consistant en, la matière liquide, de manière à obtenir en fin d'étape b) l'alliage nitruré sous la forme d'une pièce.

La formation du bain peut être opéré dans un creuset, au moyen d'un dispositif de chauffe conventionnel, tel qu'un four à arc électrique.

L'étape b) est de préférence effectuée au sein de l'atmosphère non-oxydante. Le bain peut être coulé dans moule, qui de préférence est conformé pour que la pièce obtenue en fin d'étape b) présente une masse de préférence supérieure à 0,1 kg, ou supérieure à 1 kg, ou supérieure à 10 kg.

A l'étape b), le refroidissement peut être effectué par trempe thermique à une température de refroidissement supérieure à 100 K.s⁻¹.

De préférence, afin d'augmenter l'effet de durcissement structural, le procédé de fabrication par fusion selon le deuxième mode de mise en œuvre comporte les étapes successives suivantes de :
c) traitement thermique de la pièce à une température inférieure à la température de fusion à l'étape a), et
d) refroidissement par trempe thermique de la pièce.

L'étape c) de traitement thermique dissout au moins partiellement, voire totalement les précipités nitrurés formés en fin d'étape b). Notamment, elle permet à l'azote de diffuser en solution solide dans la matrice de l'alliage concentré complexe. Le traitement thermique à l'étape c) est de préférence opéré à une température supérieure à 1300°C.

De préférence, l'étape c) de traitement thermique est effectuée au sein d'une atmosphère non-oxydante formée d'un gaz réactif contenant de l'azote, notamment telle que décrite ci-dessus.

L'étape d) de refroidissement par trempe thermique de la pièce entraîne la précipitation d'autres précipités nitrurés au sein de la matrice de l'alliage concentré complexe et/ou la réduction de la taille des précipités nitrurés présents en fin d'étape c). La trempe thermique peut être opérée au moyen d'un liquide, par exemple choisi parmi l'eau, l'huile et l'azote liquide, ou d'un gaz, par exemple étant le gaz réactif.

L'homme du métier sait aisément mettre en œuvre les étapes c) et d) pour obtenir une taille prédéterminée des précipités nitrurés au sein de l'alliage nitruré.

### POUDRE

L'invention concerne par ailleurs une poudre comportant, voire constituée par, des particules formées de l'alliage nitruré selon l'invention.

La poudre peut comporter pour plus 90,0 %, de préférence pour plus de 99, % de sa masse, les particules formées de l'alliage nitruré selon l'invention.

La poudre peut présenter un percentile 90 (D₉₀) compris entre 10 µm et 100 µm, voire compris entre 30 µm et 70 µm, par exemple égal à 45 µm.

Le percentile 90 (D₉₀) d'une poudre est tel que 90 % en nombre des particules de la poudre ont une taille inférieure à D₉₀ et 10 % des particules en nombre ont une taille supérieure à D₉₀. Le percentile 90 peut être déterminé à l'aide d'une distribution granulométrique réalisée à l'aide d'un granulomètre laser.

De préférence, plus de 90% des particules présentent un indice de sphéricité supérieur à 0,3, de préférence compris entre 0,8 et 1.

L'« indice de sphéricité » d'une particule est le rapport entre son plus petit diamètre et son plus grand diamètre, les diamètres étant mesurés sur des clichés réalisés par exemple par microscopie électronique à balayage à un grossissement de 1000.

Plus de 50 %, de préférence plus de 90 % des particules présentent une taille de grain inférieure à 10 µm, voire inférieure à 5 µm. La « taille de grain » peut être mesurée conformément à la norme ISO 643, ou par la technique EBSD (acronyme de « Electron Back Scattered Diffraction » en anglais) suivant la norme ASTM E112.

La poudre peut être obtenue au moyen de du procédé de fabrication par fusion décrit ci-dessus ou au moyen du procédé de fabrication par mécanosynthèse décrit ci-après. Ces procédés induisent avantageusement une nitruration de l'alliage concentré complexe au cœur des particules, et pas seulement en surface.

### PROCEDE DE FABRICATION D'UNE POUDRE PAR MECANOSYNTHESE

L'invention concerne un procédé de fabrication d'une poudre selon l'invention, dénommé par la suite « procédé de fabrication d'une poudre par mécanosynthèse », le procédé comportant la formation des particules de la poudre selon l'invention par mécanosynthèse de matières premières au sein d'une atmosphère non-oxydante formée d'un gaz réactif contenant de l'azote.

L'atmosphère non-oxydante est de préférence telle que décrite ci-dessus.

Les matières premières particulaires peuvent comporter des particules comportant pour plus de 90,0 % de leur masse, au moins un, notamment un unique, métal de base de l'alliage concentré complexe. Par exemple, pour former un alliage complexe de formule Al_{0,3}CoCrFeNi, on peut fournir des matières premières particulaires sous la forme de particules de Al, Co, Fr, Fe et Ni respectivement.

En variante, les matières premières particulaires peuvent comporter des particules d'un alliage binaire, ou d'un alliage ternaire.

La mécanosynthèse des matières premières peut être opérée en broyant les matières premières dans la cuve d'un broyeur.

Le broyeur peut être choisi parmi un broyeur à billes, un broyeur à rouleau et un broyeur planétaire.

Au cours du broyage, les matières premières particulaires sont, à de multiples reprises, aplaties, soudées entre elles à froid, rompues et resoudées entre elles à nouveau. L'impact des organes de broyage sur les matières premières les déforme plastiquement, les écrouie puis les rompt. Les surfaces de rupture ainsi générées permettent une soudure à froid des particules de matières premières les unes aux autres, jusqu'à formation de l'alliage concentré complexe. L'homme du métier sait déterminer aisément les conditions de mécanosynthèse pour former l'alliage concentré complexe.

Par ailleurs, l'azote de l'atmosphère non oxydante réagit avec une ou plusieurs matières premières particulaires pour former les précipités nitrurés. En outre, il est introduit dans la matrice de l'alliage concentré complexe. Le gaz réactif est de préférence tel que décrit ci-dessus.

### PRODUIT METALLURGIQUE

L'invention concerne aussi un produit métallurgique comportant, pour plus de 90,0 %, de préférence pour plus de 99,0 %, par exemple sensiblement pour 100 %, de sa masse, l'alliage nitruré selon l'invention.

Le produit métallurgique peut être choisi parmi une pièce ou un revêtement.

Le produit métallurgique peut présenter une porosité totale inférieure à 5 %, voire inférieure à 1 %. La porosité est mesurée par méthode de porosimétrie par poussée d'Archimède.

La masse de la pièce peut être supérieure à 0,01 kg, supérieure à 0,5 kg, supérieure à 1 kg, voire supérieure à 50 kg.

Un « revêtement » présente un rapport entre sa plus grande dimension, par exemple sa longueur, sur sa plus petite dimension, par exemple son épaisseur, supérieure à 100, supérieure à 1000, supérieure à 10000. Un revêtement nécessite d'être supporté par un substrat, par exemple fait d'un matériau métallique ou d'un matériau réfractaire. Le revêtement peut présenter une épaisseur inférieure à 1 mm.

Dans un mode de réalisation, le produit métallurgique, notamment obtenu par le procédé de fabrication par frittage, décrit ci-après, est tel que l'alliage nitruré qu'il contient présente une taille de grains inférieure à 20 µm. De préférence, plus de 50 %, voire plus de 80 %, voire plus de 90 % en nombre des précipités nitrurés ont une taille inférieure à 500 nm. Dans un tel produit métallurgique, l'alliage nitruré peut présenter une texture cristalline isotrope, c'est-à-dire que le réseau cristallin de chaque grain de l'alliage nitruré est orienté de manière aléatoire par rapport à un référentiel propre au produit métallurgique. L'alliage nitruré peut présenter au moins une propriété mécanique isotrope, la propriété mécanique étant choisie parmi le module d'élasticité, la limite d'élasticité à 0,2 % de déformation plastique Re_{0,2}, la contrainte à rupture et l'élongation à rupture. Le produit métallurgique peut présenter une densité de dislocations comprise entre 10¹⁰ m⁻² et 10¹⁶ m⁻², de préférence comprise entre 10¹⁴ m⁻² et 10¹⁶ m⁻². Par ailleurs, le produit métallurgique peut présenter une porosité inférieure à 5,0 %.

Dans un autre mode de réalisation, dans le produit métallurgique, notamment obtenu par le procédé de fabrication additive décrit ci-après, plus de 50 %, voire plus de 90 % en nombre des précipités nitrurés peuvent avoir une taille inférieure à 200 nm, voire inférieure à 80nm, voire à 50 nm. La taille de grains peut être comprise entre 1 µm et 80 µm, de préférence entre 1 µm et 30 µm. La matrice peut contenir des amas de dislocations définis par une paroi riche en dislocations environnant une zone pauvre en dislocations, les réseaux cristallins de part et d'autre de la paroi étant désorientés d'un angle inférieur à 5°. De tels amas de dislocations sont aussi conventionnellement dénommés « sous-grains ». La taille d'un amas peut être inférieure à 20 µm, voire inférieure à 5 µm. La taille d'un amas est mesurée par exemple sur une image acquise par la technique de diffraction des électrons rétrodiffusés, aussi dénommée « EBSD » (acronyme anglais de « Electron Back Scattered Diffraction »), correspondant au diamètre du cercle circonscrit à l'amas. Par ailleurs, le produit métallurgique peut présenter une porosité inférieure à 5,0%, voire inférieure à 1,0 %.

Le produit métallurgique peut être un élément d'un blindage, un élément structurel ou un élément de renfort, par exemple dans le domaine automobile ou militaire. Par exemple, il peut être disposé en lieu et place d'un produit métallurgique en acier TWIP (acronyme anglais de «TW in Induced Plasticity ») ou d'un produit métallurgique en acier TRIP.

Le produit métallurgique peut être fabriqué par l'un quelconque des procédés de fabrication par frittage ou par fabrication additive tels que décrits ci-après. Ces procédés induisent avantageusement une nitruration de l'alliage concentré complexe au cœur du produit métallurgique, et pas seulement en surface.

### PROCEDE DE FABRICATION D'UN PRODUIT METALLURGIQUE PAR FRITTAGE

L'invention concerne un procédé de fabrication d'un produit métallurgique selon l'invention, dénommé par la suite « procédé de fabrication par frittage », le procédé comportant i) la fourniture d'une poudre de départ comportant, voire étant constituée par, des particules contenant l'alliage concentré complexe tel que décrit ci-dessus, et ii) le frittage de la poudre de départ pour obtenir la pièce,
la poudre de départ étant la poudre selon l'invention et/ou le frittage à l'étape ii) étant opéré au sein d'une atmosphère non-oxydante formée d'un gaz réactif contenant de l'azote.

Au cours de l'étape de frittage, l'alliage nitruré est à l'état solide. La forme générale et l'orientation générale des grains dans chaque particule est sensiblement maintenue. Le produit métallurgique fritté conserve ainsi sensiblement la microstructure des particules de la poudre.

L'atmosphère non oxydante est de préférence telle que décrite ci-dessus.

Selon un premier mode de mise en œuvre, la poudre de départ est la poudre selon l'invention. Le frittage à l'étape ii) peut alors être opérée au sein de l'atmosphère non-oxydante ou au sein d'une atmosphère neutre.

Selon un deuxième mode de mise en œuvre, la poudre de départ contient de préférence pour plus de 90,0 %, de préférence pour plus de 95,0 %, de préférence pour plus de 99,9% de sa masse des particules comportant chacune de préférence au moins 99,0 %, de préférence au moins 99,9 % en masse de l'alliage concentré complexe, le reste étant constitué par des impuretés. Notamment, la poudre de départ peut être exempte de précipités nitrurés. Elle peut être obtenue par une méthode comportant la fusion des métaux de base de l'alliage complexe concentré sous une atmosphère neutre, par exemple sous argon. Selon ce deuxième mode de mise en œuvre, il est essentiel que le frittage soit opéré au sein de l'atmosphère non-oxydante, afin d'introduire l'azote dans la matrice en l'alliage concentré complexe pour former des précipités nitrurés.

La poudre de départ peut présenter un percentile 90 (D₉₀) compris entre 10 µm et 90 µm, voire compris entre 30 µm et 70 µm, par exemple égal à 45 µm.

Dans un mode de mise en œuvre, préalablement à l'étape de frittage, et en particulier pour former le produit métallurgique sous la forme d'une pièce, le procédé peut comporter une étape de mise en forme de la poudre de départ pour former une préforme.

Un liant peut être ajouté à la poudre de départ préalablement à la mise en forme de la préforme. Un « liant » est un constituant qui lie entre elles les particules de la préforme. La cohésion de la préforme est ainsi assurée et la préforme est manipulable. Par exemple, la préforme peut être transportée du moule dans laquelle elle a été formée jusqu'à un dispositif de déliantage. L'homme du métier sait de manière routinière choisir le liant et la quantité de liant pour fabriquer une préforme cohésive. Le liant est par exemple un polymère choisi parmi les alcools polyvinyliques, les polyalkylènes glycols et les polyalkyles (méth)acrylates et leurs mélanges.

La poudre de départ, ou le mélange du liant et de la poudre de départ le cas échéant, peut être versée dans moule, puis mis en forme pour obtenir la préforme. Le moule peut être conformé pour que le produit métallurgique obtenue en fin d'étape ii) présente une masse supérieure à 0,01 kg, ou supérieure à 5 kg, ou supérieure à 10 kg.

La mise en forme peut résulter d'un pressage isostatique, d'un coulage en barbotine ou d'un pressage uniaxial.

En variante, la mise en forme peut consister à verser la poudre de départ dans un moule, la préforme étant alors maintenue par les parois du moule. Par exemple, aucun liant n'est ajouté à la poudre. La préforme ne présente alors pas de cohésion propre.

Dans un autre mode de mise en œuvre, pour former le produit métallurgique sous la forme d'un revêtement, la poudre de départ peut être déposée, par exemple projetée, sur un substrat. La poudre est ensuite frittée de sorte que le revêtement adhère sur le substrat.

Quel que soit le mode de mise en œuvre, l'étape de frittage est de préférence effectuée par voie solide. Par « voie solide », on entend que deux particules de la poudre de départ en contact l'une de l'autre sont rigidement liées entre elles sous l'effet de diffusion de matière à l'état solide entre les deux particules.

L'étape ii) de frittage peut être opérée au moyen d'une technique choisie parmi le frittage à pression atmosphérique, le frittage isostatique à chaud, le frittage sous pression uniaxiale à chaud, et le frittage SPS.

De préférence, l'étape ii) de frittage est mise en œuvre par frittage flash, notamment par frittage SPS (acronyme anglais de « Spark Plasma Sintering »). Le frittage SPS, bien connu de l'homme du métier de la métallurgie des poudres, comprend le chauffage d'un moule électriquement conducteur, de préférence en graphite, qui contient la poudre à fritter. La poudre est comprimée uniaxialement au moyen de pistons de compression, par exemple en graphite et le chauffage est opéré par effet Joule en soumettant le moule à des impulsions de courant électrique. Un exemple de dispositif pour mettre en œuvre le procédé SPS est décrit par exemple dans l'ouvrage « Mise en forme de matériaux par frittage flash », Juil. 2006, Claude Estournes, Technique de l'ingénieur.

Le frittage SPS de la poudre est plus rapide que par les procédés conventionnels. Il limite en outre la croissance des grains de l'alliage nitruré au cours du frittage, conserve des propriétés mécaniques élevées, et résulte en un produit métallurgique dense.

L'étape de frittage est opérée à une température de frittage inférieure à la température de fusion de l'alliage concentré complexe.

De préférence, la durée de maintien à la température de frittage est supérieure ou égale à 3 minutes, par exemple supérieure ou égale à 5 minutes, pour assurer une liaison suffisante des particules de la poudre de départ. Elle est de préférence inférieure ou égale à 60 minutes, de préférence inférieure ou égale à 30 minutes, voire de préférence inférieure ou égale à 20 minutes. Selon le premier mode de mise en œuvre du procédé, où la poudre de départ est selon l'invention, une telle durée de maintien limite la ségrégation des précipités nitrurés aux joints de grain ainsi qu'une croissance excessive des grains, et assure une distribution homogène des précipités nitrurés au sein de la matrice de l'alliage nitruré. Par ailleurs, dans la variante où l'alliage nitruré comporte une matrice de Al_{0,3}CoCrFeNi et des précipités nitrurés de AlN, la structure de la matrice cristalline de type cubiques à faces centrées et la structure hexagonale compacte des précipités nitrurés de AlN sont conservées. Selon le deuxième mode de mise en œuvre, une telle durée de maintien favorise une répartition homogène des nitrures au sein de la matrice.

De préférence, l'étape de frittage est opérée sous une pression comprise entre 10 MPa [MégaPascal] et 100 MPa, de préférence comprise entre 30 MPa et 50 MPa.

La vitesse chauffage jusqu'à la température de frittage peut être supérieure à 30 °C.min⁻¹, de préférence supérieure à 50 °C.min⁻¹.

La vitesse de refroidissement peut être supérieure à 100 °C.s⁻¹, de préférence supérieure à 400°C.s⁻¹.

De préférence, la porosité totale du produit métallurgique obtenu par le procédé de frittage, mesurée selon la méthode de porosimétrie par poussée d'Archimède, est inférieure à 5,0 %, voire inférieure à 1,0 %. L'homme du métier est capable de déterminer les conditions pour optimiser la densification du produit métallurgique au cours du frittage.

### PROCEDE DE FABRICATION ADDITIVE D'UN PRODUIT METALLURGIQUE

Par ailleurs, l'invention concerne un autre procédé de fabrication d'un produit métallurgique, dénommé par la suite « procédé de fabrication additive », le procédé comportant :
i') la fourniture d'une poudre de départ comportant, voire étant constituée par, des particules contenant l'alliage concentré complexe tel que décrit ci-dessus, et
ii') la mise en forme du produit métallurgique par une technique de fabrication additive, à partir de la poudre de départ,
la poudre de départ étant formée de particules constituées de l'alliage nitruré selon l'invention et/ou la mise en forme à l'étape ii') étant opérée au sein d'une atmosphère non-oxydante formée d'un gaz réactif contenant de l'azote.

Les techniques de fabrication additive, bien connues de l'homme du métier, permettent la fabrication de produits métallurgiques de formes complexes, difficiles ou impossibles à finaliser par frittage ou par coulage d'une matière en fusion.

En outre, de manière particulièrement surprenante, les inventeurs ont découvert que le procédé de fabrication additive résulte en un alliage nitruré présentant un durcissement structural plus élevé que lors d'une production d'un produit métallurgique de mêmes dimensions au moyen du procédé de fabrication par frittage. Ils attribuent ce fort durcissement structural à la fusion de l'alliage concentré complexe et à la vitesse de refroidissement particulièrement élevée de la technique de fabrication additive, qui limite l'aptitude de l'alliage nitruré en cours de la solidification à se déformer pour compenser les effets de changement de volume au cours du passage de l'état solide à l'état liquide et à la dilatation thermique de l'alliage concentré complexe au cours du refroidissement. Il en résulte le développement de dislocations qui glissent sur les plans cristallins pour produire une déformation plastique de l'alliage nitruré. Les dislocations ainsi créées rencontrent les précipités nitrurés présents dans la matrice, ce qui amplifie le durcissement structural par mécanisme d'ancrage. En outre, la vitesse de refroidissement élevée du procédé de fabrication additive résulte en la formation de nitrures de faible taille ou, le cas échéant, en la conservation de la taille des nitrures préalablement formés, induisant ainsi un effet de durcissement important.

En outre, la technique de fabrication additive provoque la fusion et la solidification de l'alliage nitruré. La microstructure des grains des particules de la poudre de départ est détruite par la fusion et une nouvelle microstructure est générée, par germination et croissance de nouveaux grains de l'alliage concentré complexe au cours de la solidification.

Selon un premier mode de mise en œuvre, la poudre de départ à l'étape i') est la poudre selon l'invention. La mise en forme à l'étape ii') peut alors être réalisée sous l'atmosphère non-oxydante ou sous une atmosphère neutre.

Selon un deuxième mode de mise en œuvre, la poudre de départ contient de préférence pour plus de 90,0 %, de préférence pour plus de 95,0 %, de préférence pour plus de 99,9% de sa masse, des particules comportant chacune de préférence au moins 99,0 %, de préférence au moins 99,9 %, mieux 99,9 % en masse de l'alliage concentré complexe, le reste étant constitué par des impuretés. Notamment, la poudre peut être exempte de précipités nitrurés. Elle peut être obtenue par une méthode comportant la fusion des métaux de base de l'alliage complexe concentré sous une atmosphère neutre, par exemple sous argon. Selon ce deuxième mode de mise en œuvre, il est essentiel que la mise en forme à l'étape ii') soit opérée au sein de l'atmosphère non-oxydante, pour introduire l'azote dans l'alliage concentré complexe de façon à y former les précipités nitrurés.

A l'étape i'), la poudre de départ peut présenter un percentile 90 (D₉₀) compris entre 10 µm et 100 µm, voire compris entre 30 µm et 70 µm, par exemple égal à 45 µm.

A l'étape ii'), l'atmosphère non oxydante peut être telle que décrite ci-dessus.

La technique de fabrication additive peut être choisie parmi la fabrication additive sur lit de poudre et la fabrication additive par projection de poudre.

La fabrication additive par projection de poudre peut comporter l'injection de la poudre de départ dans un faisceau laser pour fondre la poudre de départ dans le faisceau et la déposer sur le produit métallurgique en formation. Une telle technique est dénommée fabrication additive « CLAD», acronyme de « Construction Laser Additive Directe ». Elle est par exemple décrite dans « Laser cladding », R. Vilar, Vol. 11, numéro 64, Journal of laser applications, (1999). La fabrication additive par projection de poudre est particulièrement adaptée pour former le produit métallurgique sous la forme d'une poudre, déposée sur un substrat.

La fabrication additive sur lit de poudre peut comporter la fusion de la poudre de départ au moyen d'un faisceau d'électrons. Une telle technique est dénommée « fabrication additive par fusion de faisceau d'électrons sur lit de poudre » ou fabrication additive « EBM», acronyme anglais de « Electron Beam Method ». Elle est par exemple décrite dans « Fabrication additive - principes généraux », Floriane Laverne, Techniques de l'Ingénieur (2016).

En variante, la fabrication additive sur lit de poudre peut comporter la fusion de la poudre de départ au moyen d'un faisceau laser. Une telle technique est dénommée « fabrication additive par fusion laser sur lit de poudre » ou fabrication additive « LBM », acronyme anglais de « Laser Beam Method ». Elle est par exemple décrite dans « Fabrication additive - principes généraux », Floriane Laverne, Techniques de l'Ingénieur (2016).

De préférence, la technique de fabrication additive mise en œuvre à l'étape ii') est la fabrication additive LBM.

La fabrication additive LBM comprend en particulier la répétition du cycle comprenant les étapes suivantes consistant à:
i1) former une première couche de particules de la poudre de départ,
i2) fondre une partie de la première couche en l'irradiant avec un faisceau laser pour former une portion du produit métallurgique,
i3) former une deuxième couche de particules de la poudre de départ en surface de la portion du produit métallurgique formée à l'étape précédente, et
i4) fondre une partie de la deuxième couche l'irradiant avec le faisceau laser de manière à la souder sur la portion du produit métallurgique.

De préférence, l'épaisseur de la première couche ou de la deuxième couche est inférieure à 200 µm, de préférence inférieure à 100 µm, de préférence comprise entre 20 µm et 50 µm.

De préférence, la puissance du faisceau laser est comprise entre 100 W et 450 W.

La fusion d'une partie de la première couche et/ou de la deuxième couche peut être effectuée en déplaçant le faisceau laser le long de lignes régulièrement espacées les unes des autres, par exemple d'un espacement, dénommé « hatching space » en anglais, compris entre 30 µm et 110 µm. Une telle méthode déplacement du faisceau laser est dénommée « *meander scanning strategy* » en anglais.

La vitesse de refroidissement de la portion du produit métallurgique formée en fin d'étape i2) ou en fin d'étape i4) peut être comprise entre 10⁴ K.s⁻¹ et 10⁸ K.s⁻¹.

Dans du produit métallurgique obtenu par le procédé de fabrication additive, plus de 50 %, voire plus de 90 % en nombre des précipités nitrurés peuvent avoir une taille inférieure à 200 nm, voire inférieure à 80 nm, voire inférieure à 50 nm. Le procédé de fabrication additive aboutit ainsi à du produit métallurgique comportant une densité en nombre élevée de précipités nitrurés, ce qui augmente le nombre de sites d'ancrage des dislocations et augmente le durcissement structural.

Par ailleurs, le procédé de fabrication additive d'un produit métallurgique, le procédé de fabrication par frittage d'un produit métallurgique et le procédé de fabrication par fusion de l'alliage sous la forme d'une pièce peuvent chacun comporter au moins une étape additionnelle.

L'étape additionnelle peut consister à déformer plastiquement le produit métallurgique. La déformation plastique introduit des amas de dislocations, tels que décrits ci-dessus, dans la matrice de l'alliage nitruré, qui par effet d'ancrage sur les précipités nitrurés, augmente l'effet de durcissement structural. Elle est plus particulièrement adaptée au procédé de fabrication par frittage et au procédé de fabrication par fusion qui produisent un produit métallurgique frittée et une pièce fondue respectivement, dans lesquelles les densités de dislocations peuvent être faibles, par exemple inférieures à 10¹⁴ m⁻².

L'étape additionnelle de déformation plastique peut être mise en œuvre par une technique apte à générer de grandes déformations plastiques. Une telle technique peut être choisie parmi le laminage, le forgeage, la compression simple, la compression plane aussi dénommée « Chanel Die compression » en anglais, l'extrusion coudée à aires égales aussi dénommée extrusion « ECAE », acronyme anglais de « Equal Channel Angular Extrusion » et la torsion sous haute pression aussi dénommée torsion « HPT », acronyme anglais de « High Plastic Torsion ».

L'étape additionnelle peut consister en un recuit, par exemple à une température comprise entre 200 °C et 700 °C, afin d'annihiler les dislocations excédentaires présentes dans les amas de dislocations, et augmenter ainsi l'élongation à rupture de l'alliage nitruré. L'étape additionnelle de recuit peut être postérieure à l'étape additionnelle de déformation plastique. En variante, elle peut être mise en œuvre consécutivement à l'étape ii') de mise en forme du produit métallurgique du procédé de fabrication additive, pour augmenter l'élongation à rupture du produit métallurgique.

L'invention est maintenant illustrée par des exemples et les figures suivantes.
[Fig 1] La figure 1 est une photographie acquise au microscope électronique à balayage d'une section d'une particule de la poudre selon l'invention ;
[Fig 2] la figure 2 est une photographie acquise au microscope électronique à balayage d'une section de la particule de la figure 1, observée à plus fort grandissement ;
[Fig 3] La figure 3 est une photographie acquise au microscope électronique à balayage d'une section d'une pièce obtenue par le procédé de fabrication par frittage ;
[Fig 4] la figure 4 est une image acquise en microscopie à balayage à un grossissement de 10000, traitée par effet de seuillage;
[Fig 5] la figure 5 est un graphique représentant l'évolution de la contrainte en fonction de l'élongation d'une éprouvette de traction, obtenue par le procédé de fabrication d'une pièce par frittage et d'une éprouvette en alliage concentré complexe non durci;
[Fig 6] la figure 6 est une image acquise en microscopie à balayage d'une partie d'une pièce obtenue par le procédé de fabrication additive d'une pièce ;
[Fig 7] la figure 7 est une cartographie acquise par diffraction des électrons rétrodiffusées (EBSD en anglais) d'une partie d'une pièce obtenue par le procédé de fabrication additive d'une pièce ; et
[Fig 8] la figure 8 est un graphique représentant l'évolution de la contrainte en fonction de l'élongation d'une éprouvette de traction, obtenue par le procédé de fabrication additive et d'une éprouvette en alliage concentré complexe non durci;

### Exemple 1 : poudre d'alliage Al_{0,3}CoCrFeNi nitruré selon l'invention

Pour produire la poudre de l'exemple 1, les matières premières suivantes ont été utilisées :
- poudre d'aluminium, de pureté supérieure à 98 %,
- poudre de chrome, de pureté supérieure à 98 %,
- poudre de nickel, de pureté supérieure à 98 %,
- poudre de fer, de pureté supérieure à 98 %, et
- poudre de cobalt, de pureté supérieure à 98 %,

Les matières premières ont été pesées de manière à ce que la poudre présente la composition souhaitée.

Elles ont été ensuite mélangées puis chauffées à une température supérieure à 1400 °C au moyen d'un four à arc électrique sous une atmosphère consistant en de l'azote, jusqu'à obtention d'un bain liquide.

Un jet de liquide en fusion a ensuite été formé puis atomisé.

Les gouttes ont ensuite été refroidies de manière à obtenir les particules de la poudre d'alliage nitruré.

La poudre ainsi obtenue est formée de particules de Al_{0,3}CoCrFeNi nitruré. Elle présente une distribution granulométrique caractérisée par un percentile 90 (D₉₀) égal à 45 µm. La masse volumique de l'alliage, mesurée au moyen d'un pycnomètre He est égale à 7,78 ±0,01 g.cm⁻³. Les particules présentent un facteur de forme compris entre 0,5 et 1.

Des particules de la poudre ont été prélevées et enrobées dans une résine pour former un échantillon d'observation. L'échantillon d'observation a été préparé selon des conditions de polissage métallographiques conventionnelles, puis disposé dans la chambre d'un microscope électronique à balayage

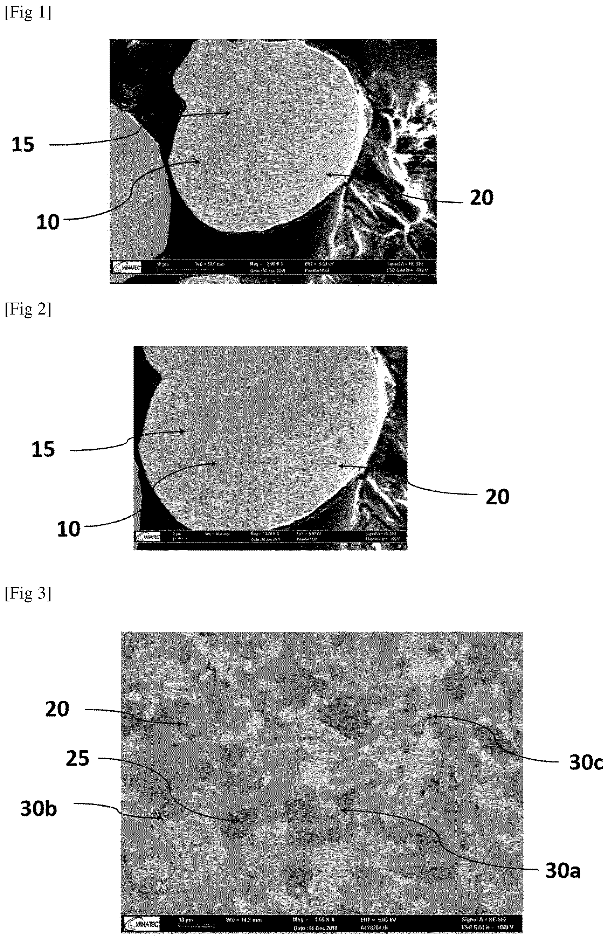

Comme cela est observé sur les figures 1 et 2, la microstructure de l'alliage Al_{0,3}CoCrFeNi nitruré est composé d'une matrice 10 constituée de l'alliage complexe, se présentant sous la forme d'une pluralité de grains 15, et de précipités 20 de nitrure d'aluminium. Au sein de la poudre, l'alliage nitruré présente une taille de grains d'environ 5 µm. Par ailleurs, une analyse par EBSD a montré que la matrice se présente sous une forme de structure cristalline cubique à faces centrées.

Les précipités nitrurés, visibles en noir sur les photographies des figures 1 et 2, sont dispersés de manière homogène à l'intérieur des grains et aux joints de grain. En outre, ils présentent, pour plus de 90 % d'entre eux une taille inférieure à 500 nm.

### Exemple 2 : fabrication par frittage SPS d'une pièce

Une pièce est préparée au moyen de 0,1 kg de la poudre de l'exemple 1. La poudre a été disposée dans un moule en graphite puis frittée au moyen d'un dispositif de frittage SPS commercialisé par la société FCT GmBh. Le frittage a été opéré à une température de 1150 °C pendant une durée de maintien en température de 10 minutes, et sous une pression de 32 MPa.

Comme cela peut être observé sur la figure 3, l'alliage nitruré présente, au sein de la pièce frittée, une microstructure composée de grains d'une matrice formée de grains 25 de forme quelconque et d'une taille d'environ 8 µm. Le frittage SPS a eu pour effet de limiter la croissance des grains, tout en conservant la trace des particules de la poudre. Les interfaces 30a-c entre les particules de la poudre sont par exemple visibles. Par ailleurs, les précipités nitrurés 20 sont dispersés au cœur des grains ainsi qu'aux joints entre les grains.

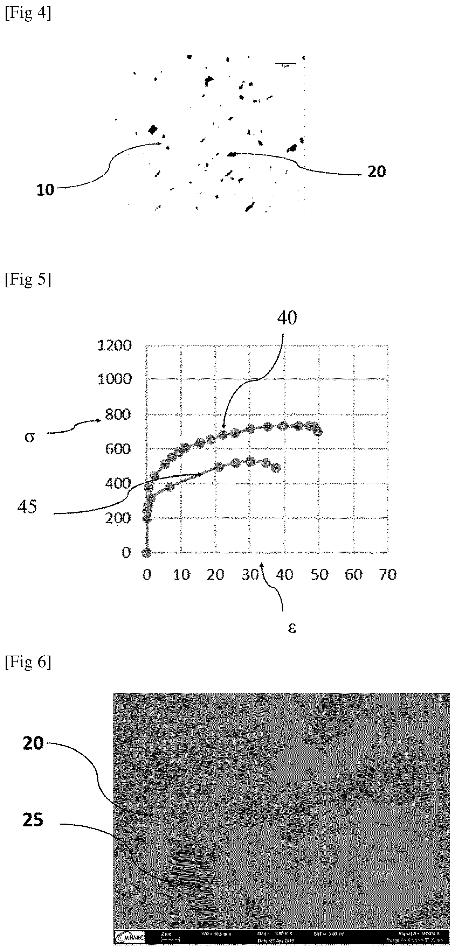

Sur la figure 4, l'image acquise par microscopie électronique à balayage a été filtrée, de manière à révéler les précipités nitrurés 20 qui apparaissent plus sombres que la matrice. La concentration, mesurées sur une zone de 80 µm², révèle que la densité surfacique de particules est d'environ 2 %, les particules présentant une taille moyenne de 100 nm.

Au cours d'une déformation plastique ultérieure de la pièce, les précipités nitrurés de AlN forment une phase plus dure que la matrice qui contribue au durcissement structural de l'alliage nitruré. La figure 5 est un graphique illustrant l'évolution de la contrainte σ, exprimée en MPa, en fonction de l'élongation ε d'une éprouvette 40 obtenue par frittage SPS de la poudre en alliage nitruré et d'une éprouvette 45 de forme et dimensions identiques formé de l'alliage concentré complexe. L'élongation ε, exprimée en pourcents, est égale à Δl/l₀ où Δl est la variation de longueur de l'éprouvette et l₀ sa longueur initiale. Comme cela peut être observé, l'éprouvette en l'alliage nitruré présente à la fois une contrainte à rupture et une élongation à rupture plus élevés.

### Exemple 3 : fabrication additive d'une pièce

Une pièce a été fabriquée par la technique de fabrication additive laser LBM à partir de la poudre de l'exemple 1, au moyen d'un dispositif commercialisé sous la référence PRO X 200 par la société 3D Systems.

L'alliage nitruré présente au sein de la pièce une microstructure sensiblement différente de celle qu'il présentait au sein de la poudre.

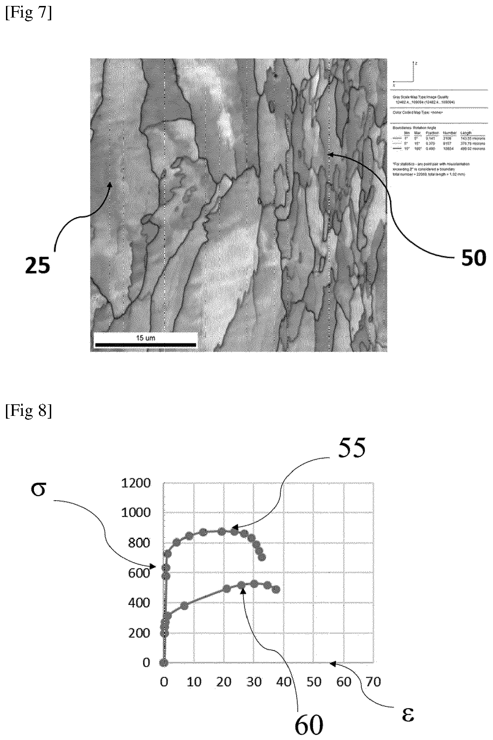

Comme cela peut être observé sur les figures 6 et 7, les grains 25 présentent une taille plus petite et ont une forme généralement allongée. Ce changement de microstructure est lié à la fusion des particules de la poudre qui détruit la microstructure de la poudre, et au refroidissement rapide qui provoque une nouvelle précipitation de nitrures et la germination et la croissance de nouveaux grains.

Par ailleurs, la densité surfacique de de nitrure d'aluminium, mesurée à un grandissement de 6000 est comprise entre 0,1 % et 0,5%. Les précipités nitrurés présentent une taille moyenne d'environ 60 nm. Ils sont de taille plus petite que dans la poudre de départ.

En outre, les précipités participent au cours du refroidissement à la formation d'amas 50 de dislocations d'une taille de l'ordre de quelques microns. Ils sont identifiables sur la partie droite de la cartographie EBSD de la figure 7, car désorientés d'un angle inférieur à 5° les uns des autres de part et d'autre d'une paroi de dislocations.

Enfin, comme cela est observé sur la figure 8, l'alliage nitruré de la pièce 55 obtenue par fabrication additive présente une limite d'élasticité plus de 3 fois supérieure à la limite d'élasticité d'une pièce 60 de mêmes dimensions, formée de l'alliage concentré complexe. Elle présente aussi une contrainte à rupture plus de 1,8 fois plus élevée. Afin d'augmenter l'élongation à rupture, un traitement thermique de la pièce 55 peut être mis en œuvre.

Comme cela apparaît à la lecture de la description, l'alliage nitruré présente un durcissement important et peut être fabriqué selon des procédés de mise en œuvre simple.

Bien évidemment, l'invention n'est pas limitée aux modes de réalisation et de mise en œuvre décrits dans la description.

## Revendications

1. Procédé de fabrication d'un produit métallurgique comportant, pour plus de 90,0 % de sa masse, un alliage nitruré à durcissement structural comportant :
- une matrice cristalline en un alliage concentré complexe comportant au moins un métal de base nitrurigène, et
- des précipités nitrurés, dispersés dans la matrice, en un nitrure métallique,
le procédé comportant :
i') la fourniture d'une poudre de départ comportant, voire étant constituée par, des particules contenant l'alliage concentré complexe, et
ii') la mise en forme du produit métallurgique par une technique de fabrication additive, à partir de la poudre de départ,
la poudre de départ comportant, voire étant constituée par, des particules formées de l'alliage nitruré et la mise en forme à l'étape ii') étant réalisée au sein d'une atmosphère non-oxydante formée d'un gaz réactif contenant de l'azote ou sous une atmosphère neutre.

2. Procédé selon la revendication 1, la technique de fabrication additive étant choisie parmi la fabrication additive sur lit de poudre et la fabrication additive par projection de poudre.

3. Procédé selon la revendication précédente, la technique de fabrication additive mise en œuvre à l'étape ii') étant la fabrication additive LBM.

4. Procédé selon la revendication précédente, la puissance du faisceau laser étant comprise entre 100 W et 450 W.

5. Procédé selon l'une quelconque des revendications précédentes, la porosité totale du produit métallurgique obtenu en fin d'étape ii'), mesurée par méthode de porosimétrie par poussée d'Archimède, est inférieure à 5,0 %.

6. Procédé selon l'une quelconque des revendications précédentes, le métal de base étant choisi parmi le scandium, le titane, le vanadium, le chrome, le manganèse, le fer, le cobalt, le nickel, le cuivre, le zinc, le zirconium, le niobium, le molybdène, l'hafnium, le tantale, le tungstène, le rhénium, l'aluminium et le silicium, et de préférence les précipités nitrurés étant en un nitrure dudit métal de base.

7. Procédé selon l'une quelconque des revendications précédentes, l'alliage concentré complexe comportant de préférence au moins deux, voire au moins trois métaux de base choisi parmi le titane, l'aluminium, le zirconium, le silicium, le vanadium, le chrome, le molybdène, le cobalt, le nickel et le fer.

8. Procédé selon l'une quelconque des revendications précédentes, l'alliage concentré complexe comportant de l'aluminium.

9. Procédé selon l'une quelconque des revendications précédentes, l'alliage concentré complexe étant choisi parmi AlₓCoCrFeNi, avec x compris entre 0,05 et 1, et FeCoNiCrTiAl.

10. Procédé selon la revendication précédente, l'alliage concentré complexe étant de formule Alo,3CoCrFeNi.

11. Procédé selon l'une quelconque des revendications précédentes, plus de 50 %, voire plus de 90 % en nombre des précipités nitrurés ayant une taille inférieure à 200 nm, voire inférieure 80 nm, voire inférieure à 50 nm.

12. Procédé selon l'une quelconque des revendications précédentes, les précipités nitrurés étant en un nitrure d'un des métaux de base de l'alliage concentré complexe.

13. Procédé selon l'une quelconque des revendications précédentes, les précipités nitrurés étant en nitrure d'aluminium.
